# EUROPEAN PATENT APPLICATION

(11) **EP 4 382 963 A1**
(43) Date of publication of application: **12.06.2024**
(21) Application number: 22212207.9
(22) Date of filing: 08.12.2022
(51) Int. Cl.: G01S 13/76, H04L 25/02

(54) **METHODS AND DEVICE FOR QUALIFYING A WIRELESS DISTANCE MEASUREMENT**

(71) Applicant: Rohde & Schwarz GmbH & Co. KG, 81671 München (DE)
(72) Inventor: RUENGELER, Matthias, 85551 Kirchheim (DE); NEUMANN, Stephan, 82054 Sauerlach-Lochhofen (DE); WINKLHOFER, Max, 80809 München (DE)
(74) Representative: Kehl, Ascherl, Liebhoff & Ettmayr Patentanwälte Partnerschaft mbB

(57) **Abstract**

The present disclosure provides a method for qualifying a wireless distance measurement, the method comprising demodulating at least two sections of a wireless signal that is received for performing the wireless distance measurement, calculating a channel impulse response for each one of the at least two demodulated sections, and qualifying the wireless distance measurement as incorrect if the calculated channel impulse responses are not substantially equal. In addition, the present disclosure provides a respective method for qualifying a wireless distance measurement device, a respective device, a respective wireless communication device, a respective wireless communication system, and a respective computer program product.

## Description

### TECHNICAL FIELD

The disclosure relates to a method for qualifying a wireless distance measurement. In addition, the present disclosure relates to a respective device, a respective wireless communication device, a respective wireless communication system, and a respective computer program product.

### BACKGROUND

Although applicable to any type of ultra-wideband, UWB, measurement or communication system, the present disclosure will mainly be described in conjunction with UWB communication system that conform to the IEEE 802.15.4 standard. It is understood, that the term UWB measurement system is used in this disclosure synonymously to the term UWB communication system.

UWB ranging sensors are widely adopted in different technical fields, like position determination in robotic applications, and distance sensing in locking/unlocking applications. However, UWB ranging sensors may output ranges with significant errors in cluttered, or non-line-of-sight (NLOS) environments, or if a malicious attacker introduces fake signals into the UWB measurement system.

Accordingly, there is a need for improving the distance measurement in UWB measurement systems.

### SUMMARY

The above stated problem is solved by the features of the independent claims. It is understood, that independent claims of a claim category may be formed in analogy to the dependent claims of another claim category.

Accordingly, it is provided:
A method for qualifying a wireless distance measurement, the method comprising demodulating at least two sections of a wireless signal that is received for performing the wireless distance measurement, calculating a channel impulse response for each one of the at least two demodulated sections, and qualifying the wireless distance measurement as incorrect if the calculated channel impulse responses are not substantially equal.

Further, it is provided:
A method for qualifying a wireless distance measurement device, the method comprising emitting a wireless signal to the wireless distance measurement device for performing the wireless distance measurement; the wireless signal comprising at least two sections, wherein in a first operation mode the wireless signal does not comprise a distance-modifying signal part, and in a second operation mode the wireless signal does comprise a distance-modifying signal part. The method further comprising receiving the result of a wireless distance measurement from the wireless distance measurement device, and qualifying the wireless distance measurement device as incorrect if the wireless signal was emitted in the first operation mode and the result does not comprises a distance and/or if the wireless signal was emitted in the second operation mode and the result does comprises a distance.

Further, it is provided:
A device for qualifying a wireless distance measurement, the device comprising a signal input interface configured to receive a wireless signal that is received for performing the wireless distance measurement, and a processing element that is coupled to the signal input interface and that is configured to perform a method according to the present disclosure.

Further, it is provided:
A wireless communication device comprising a wireless communication interface, and a device according to the present disclosure.

Further, it is provided:
A wireless communication system comprising at least two wireless communication devices according to the present disclosure.

Further, it is provided:
A computer program product comprising computer readable instructions that when executed by a processor cause the processor to perform a method according to the present disclosure.

The present disclosure acknowledges that a malicious attacker may easily tamper with a UWB-based distance measurement by sending out malicious signals to influence the results of a distance measurement. Such attacks may, for example, be used to trick a locking system into assuming the presence of a wireless key device and opening a lock.

The present disclosure is based on the finding that UWB-based measurement systems, like IEEE 802.15.4z systems, measure a distance based on a single characterizing value. Such systems usually calculate the channel impulse response, CIR, for a single section of a received wireless signal. In exemplary IEEE 802.15.4z systems the channel impulse response for the scrambled timestamp sequence, STS, may be determined and a first peak in this channel impulse response may be used to determine the distance that is to be measured.

However, an attacker may easily introduce a malicious signal into a UWB measurement system, especially if such a system is used in public, for example, to open building or vehicle doors. Such a malicious signal may then cause a false first peak in the channel impulse response that is determined for the distance measurement and may lead to the result of the distance measurement indicating a shorter distance than is actually present.

Such attacks in common UWB measurement systems may only be detected with plausibility checks on a higher level. However, such plausibility checks, which may in examples be implemented with the help of artificial intelligence, have a massive performance cost.

The present disclosure, therefore, provides an alternative for detecting attacks on a UWB measurement system that has lower performance costs. It is understood, that the present disclosure is focused on determining whether a distance measurement is valid or not, and not on measuring a distance.

The method for qualifying a wireless distance measurement is based on the finding that an attacker could not possibly fake the same distance for different sections of a wireless signal or a data packet provided in the wireless signal, due to the completely different nature of the signal in the different sections.

Consequently, according to the present disclosure, at least two sections of the wireless signal that is received for performing the wireless distance measurement are demodulated. The channel impulse response is then calculated for the at least two demodulated sections. It is understood, that for further data processing more sections of the wireless signal may be demodulated. However, not all these sections necessarily need to be used for qualifying the wireless distance measurement.

The wireless signal that is received for performing the wireless distance measurement comprises a convolution of the data or bits that are sent and the actual channel impulse response, and if present, a pulse or signal provided by a malicious attacker. The channel impulse response may be calculated by correlating the bits expected for a respective one of the sections of the wireless signal with the received waveform or bits.

The correlation will create a prominent peak in the channel impulse response. Further, the channel impulse response may comprise a small peak before this prominent peak. If no attacker is present, this smaller peak represents the line of sight, LOS, path, which is the direct or shortest path and represents the distance to be measured. However, an attacker's signal may cause an earlier peak that may lead to a falsified distance measurement.

In order to identify the presence of an attacker's signal, after calculating the channel impulse responses, the channel impulse responses are compared to each other. If the channel impulse responses are not substantially equal or not substantially identical, the wireless distance measurement is qualified as incorrect. On the other hand, if the channel impulse responses are substantially equal or substantially identical, the wireless distance measurement is qualified as correct, wherein other parameters may also be considered when qualifying a wireless distance measurement as correct.

The expression "substantially equal" is to be understood, as the two or more values or signals that are to be compared being within a range or interval that is acceptable for the respective application. Such ranges or intervals may differ between different applications and may e.g., be determined experimentally, by calculations or by simulations.

The present disclosure, consequently, allows easily identifying a false or tampered-with distance measurement in a UWB measurement system.

In embodiments, the device for qualifying a wireless distance measurement may be provided as a dedicated device that is used to qualify the wireless distance measurement performed by another device. In other embodiments, the device for qualifying a wireless distance measurement may be incorporated into or be provided as part of a wireless communication or measurement device that performs the wireless distance measurement.

In embodiments of the device being provided as a dedicated device, the signal input interface may comprise a digital data interface for receiving a digital representation of the wireless signal, or an analog interface for receiving a representation of the wireless signal in an analog form. The processing element in such embodiments may be provided as at least one of a dedicated processing element e.g., a processing unit, a microcontroller, a field programmable gate array, FPGA, a complex programmable logic device, CPLD, an application specific integrated circuit, ASIC, or the like. The processing element may at least in part also be provided as a computer program product comprising computer readable instructions that may be executed by a processing element. In addition, it is understood, that any required supporting or additional hardware may be provided like e.g., a power supply circuitry and clock generation circuitry.

In an embodiment in which the device is provided in another device, the processor may be provided as additional element, or additional function or method to the firmware or operating system of a processing element that is already present in the respective application as respective computer readable instructions. Such computer readable instructions may be stored in a memory that is coupled to or integrated into the processing element. The processing element may load the computer readable instructions from the memory and execute them.

The wireless communication device may comprise any type of device that is capable of performing a wireless distance measurement, especially according to the IEEE 802.15.4z standard. In the wireless communication device, the device for qualifying a wireless distance measurement may be provided as a indicated above in an already present processing element as computer readable instructions that may be executed by that processing element.

In a wireless communication system according to the present disclosure, any number of wireless communication devices may be present in a peer-to-peer or start topology or any other possible topology that is supported by the respective communication standard. In such a wireless communication system, at least one device for qualifying a wireless distance measurement may be present as dedicated device for multiple wireless communication devices or as element in at least one of the wireless communication devices.

The method for qualifying a wireless distance measurement device may be used to test the capabilities of devices according to the present disclosure. With the method for qualifying a wireless distance measurement device, a clean wireless signal i.e., a wireless signal without any modification, may be provided to the wireless distance measurement device in a first operation mode. In this case, the wireless distance measurement device should answer with a distance i.e., perform a full wireless distance measurement.

However, in a second operation mode, a signal with a distance-modifying signal part may be transmitted to the wireless distance measurement device. A correctly operating wireless distance measurement device according to the present disclosure should detect the presence of such a distance-modifying signal part and provide the information that the wireless distance measurement is incorrect.

It is understood, that the explanations regarding the wireless signal in the method for qualifying a wireless distance measurement also apply to the wireless signal in the method for qualifying a wireless distance measurement device.

It is understood, that the term "distance-modifying signal part" may refer to a signal part as it may be provided by an attacker to tamper with a wireless distance measurement.

Further embodiments of the present disclosure are subject of the further dependent claims and of the following description, referring to the drawings.

In the following, the dependent claims referring directly or indirectly to claim 1 are described in more detail. For the avoidance of doubt, the features of the dependent claims relating to the method can be combined in all variations with each other and the disclosure of the description is not limited to the claim dependencies as specified in the claim set. In addition, the features of the claims relating to the device, the wireless communication device, the wireless communication system, and the computer program product may be combined with any of the embodiments disclosed regarding the method, wherein the single method steps may be implemented by a corresponding element of the respective apparatus.

In an embodiment, which can be combined with all other embodiments of the method mentioned above or below, qualifying the wireless distance measurement further comprises calculating a difference measure for the calculated channel impulse responses, and qualifying the wireless distance measurement as incorrect if the calculated difference measure is above a predetermined threshold.

To identify if the channel impulse responses are substantially equal or substantially identical, different approaches may be used.

In embodiments, a difference measure may be calculated for the channel impulse responses. Such a difference measure may be proportional to the actual difference. In such cases, the channel impulse responses may be accepted as being substantially equal or substantially identical if the difference measure is lower than a predetermined threshold. In other embodiments, the difference measure may be inversely proportional, and the channel impulse responses may be accepted as being substantially equal or substantially identical if the difference measure is higher than a predetermined threshold.

The predetermined threshold may be application dependent, and may, for example, be determined by calculation, simulation or by experimentation.

In another embodiment, which can be combined with all other embodiments of the method mentioned above or below, calculating a difference measure comprises calculating at least one of a root mean square of the channel impulse responses, a Kullback-Leibler divergence of the channel impulse responses, and a sum of the absolute differences between the channel impulse responses.

Of course, any mathematical method of determining the difference measure may be used. Mathematical methods that allow determining the difference measure may, therefore, comprise the root mean square or RMS, the Kullback-Leibler divergence, and the sum of the absolute differences between the channel impulse responses. It is understood, that the present disclosure is not limited to these methods any may be combined with any other adequate method.

In a further embodiment, which can be combined with all other embodiments of the method mentioned above or below, calculating a difference measure comprises calculating an individual distance based on each one of the channel impulse responses. The wireless distance measurement may be qualified as incorrect if the calculated individual distances are substantially equal but for at least one of the calculated individual distances. As alternative, the distance that represents the majority of the calculated individual distances that are substantially equal may be output as the measured distance.

Instead of comparing the individual channel impulse responses, it is also possible to calculate individual distances for each one of the sections based on the respective channel impulse responses. The individual distances in this context refer to the shortest path or the shortest distance, that is represented by the first small peak that may be present in the respective channel impulse response before the prominent or main peak.

After calculating the individual distances, the distance measurement may be qualified as incorrect if all the calculated individual distances are not substantially equal. If all calculated individual distances but at least one are substantially equal, the distance measurement may be qualified as incorrect and a respective output may be provided.

The term substantially equal in this context refers to the individual distances being within a predetermined acceptance interval or within a maximum distance to each other. The acceptance interval or maximum distance may be application specific and may be determined e.g., experimentally, by calculations or by simulations.

As an alternative, if at least one of the calculated individual distances differs from a majority of calculated distances, a distance that represents the majority of calculated distances may be output as the measured distance i.e., as the result of the distance measurement. Such a distance that represents the majority may, for example, be determined as the mean distance of all individual distances forming the majority. A majority may be defined as being present if all but a maximum predefined number of the individual distances are substantially equal.

Using the calculated distances allows re-using an implemented solution that is based on calculating a single distance. Such an implemented solution may then be re-used to calculate the individual distances, which may then be compared easily. Comparing the channel impulse responses is in such an embodiment not required.

In an embodiment, which can be combined with all other embodiments of the method mentioned above or below, the at least two sections comprise at least two of an STS section of a wireless signal according to the IEEE 802.15.4z standard, a segment x of an STS section of a wireless signal according to the IEEE 802.15.4z standard, x ranging between 1 and the highest possible segment number, an SHR section of a wireless signal according to the IEEE 802.15.4z standard, a SYNC section of an SHR section of a wireless signal according to the IEEE 802.15.4z standard, an SFD section of an SHR section of a wireless signal according to the IEEE 802.15.4z standard, a PHR section of a wireless signal according to the IEEE 802.15.4z standard, and a PPDU section of a wireless signal according to the IEEE 802.15.4z standard.

Since the IEEE 802.15.4z standard was and is developed with range or distance measurement applications in mind, the sections of a wireless signal according to the IEEE 802.15.4z may be used with the present disclosure.

The reference to the "segment x" may refer to any segment of the STS section of a wireless signal according to the IEEE 802.15.4z standard, especially segments 1 to 4. Wherein x may range between 1 and the highest possible segment number of the STS section.

As can be seen above, single sections may be embedded in other sections. In such cases, like the SYNC section in the SHR section, the superordinate or the smaller subordinate section may be used.

In another embodiment, which can be combined with all other embodiments of the method mentioned above or below, the channel impulse response is calculated for an STS section of a wireless signal according to the IEEE 802.15.4z standard, and a SYNC section of the wireless signal according to the IEEE 802.15.4z standard, and a PPDU section of the wireless signal according to the IEEE 802.15.4z standard. Qualifying the wireless distance measurement may comprise qualifying the wireless distance measurement as incorrect if the difference between the calculated channel impulse responses for the STS section and the SYNC section or the PPDU section, and the difference between the calculated channel impulse responses for the SYNC section and the PPDU section are not substantially equal.

The expression "substantially equal" regarding the differences may be interpreted as the calculated differences being within a predetermined range or distance to each other, or being of the same order of magnitude. The examples provided above for determining of two channel impulse responses are substantially equal may also be applied to this embodiment.

In an embodiment, which can be combined with all other embodiments of the method mentioned above or below, the channel impulse response is calculated for at least two different segments of an STS section of a wireless signal according to the IEEE 802.15.4z standard. Qualifying the wireless distance measurement may comprise qualifying the wireless distance measurement as incorrect if the calculated channel impulse responses are not substantially equal.

The above-provided explanations regarding how to determine if channel impulse responses are substantially equal also apply to this embodiment.

In another embodiment, which can be combined with all other embodiments of the method mentioned above or below, the channel impulse response is calculated for an STS section of a wireless signal according to the IEEE 802.15.4z standard, and a SYNC section or a PPDU section of the wireless signal according to the IEEE 802.15.4z standard. Qualifying the wireless distance measurement may comprise calculating the difference between the calculated channel impulse response of the SYNC section or the PPDU section and the calculated channel impulse response of the STS section, and qualifying the wireless distance measurement as incorrect if the calculated difference and an autocorrelation of an expected STS section are not substantially equal.

Subtracting the channel impulse response of the SYNC section or the PPDU section from the channel impulse response of the STS section will result in an impulse that represents the autocorrelation of an expected STS section without (within the measurement tolerances) additional signal elements.

Of course, the above provided explanations regarding how to determine if channel impulse responses are substantially equal may also be applied to determining if the difference between the channel impulse response of the SYNC section or the PPDU section and the channel impulse response of the STS section is substantially equal to the autocorrelation of an expected STS section.

If the result of this difference is not substantially equal to the autocorrelation of the expected STS section, a malicious attacker may have introduced an attack signal or the distance measurement may be otherwise influenced.

In a further embodiment, which can be combined with all other embodiments of the method mentioned above or below, the method further comprises subtracting a known pulse shape from the calculated channel impulse responses after calculating the channel impulse responses and prior to performing further calculations based on the calculated channel impulse responses.

A section of the wireless signal in a UWB communication system comprises many single pulses. The term "pulse shape" in this context may refer to the shape of these pulses, if all pulses have the same shape, or to an average shape of all pulses of a section, if the pulses have different shapes. The pulse shape may also be at least partially known, since it must fulfill certain time-domain (pulse-mask) and frequency-domain (frequency-mask) properties. Furthermore, in other communication systems or future versions of the UWB standard, the pulse shape itself may be predefined.

By subtracting the known pulse shape from the calculation results, the true channel impulse responses will be available.

In an embodiment, which can be combined with all other embodiments of the method mentioned above or below, the method further comprises transmitting an indication to the source of the wireless signal that indicates that the transmission of a PPDU section according to the IEEE 802.15.4z standard is required.

In the IEEE 802.15.4z standard the transmission of a PPDU section is optional. Therefore, it may be indicated to the source of the wireless signal that the transmission of the PPDU section is required. This will ensure, that the channel impulse responses required to implement the solution of the present disclosure may be reliably calculated.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a flow diagram of an embodiment of a method according to the present disclosure;
Figure 2 shows a flow diagram of another embodiment of a method according to the present disclosure;
Figure 3 shows a flow diagram of a further embodiment of a method according to the present disclosure;
Figure 4 shows a flow diagram of a further embodiment of a method according to the present disclosure;
Figure 5 shows a block diagram of an embodiment of a device for qualifying a wireless distance measurement according to the present disclosure;
Figure 6 shows a block diagram of an embodiment of a wireless communication device according to the present disclosure;
Figure 7 shows a block diagram of an embodiment of a wireless communication system according to the present disclosure; and
Figure 8 shows a flow diagram of an embodiment of a method for qualifying a wireless distance measurement device according to the present disclosure.

In the figures like reference signs denote like elements unless stated otherwise.

### DETAILED DESCRIPTION OF THE DRAWINGS

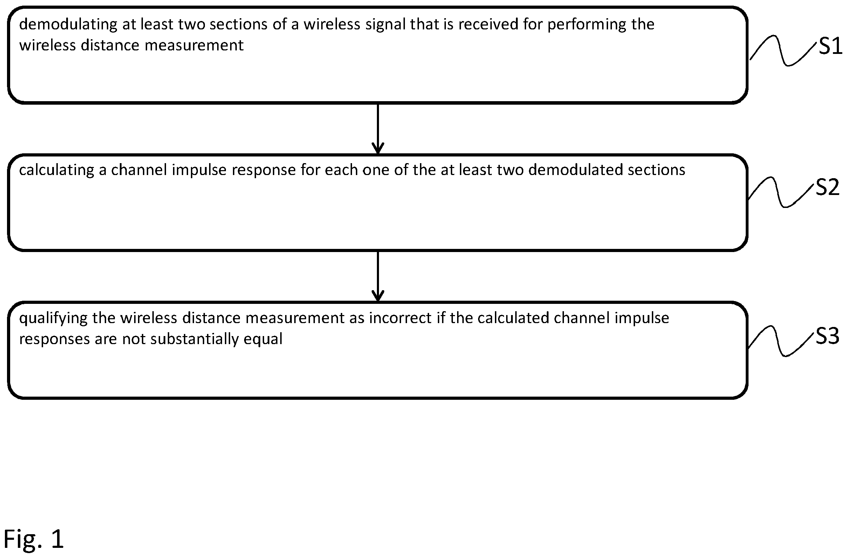

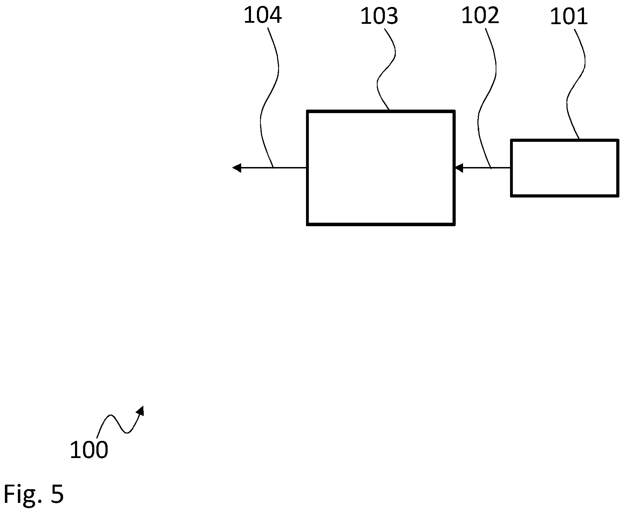

For sake of clarity the reference signs used in the description of apparatus-based Figs. 5 to 7 will also be used in the description of the method-based figures 1 - 4.

Figure 1 shows a flow diagram of an embodiment of a method for qualifying a wireless distance measurement i.e., for determining if a malicious signal or an attacker's signal is present in the wireless signal 102, 202 used for the wireless signal measurement.

The method comprises demodulating S1 at least two sections of a wireless signal 102, 202 that is received for performing the wireless distance measurement, calculating S2 a channel impulse response for each one of the at least two demodulated sections, and qualifying S3 the wireless distance measurement as incorrect if the calculated channel impulse responses are not substantially equal.

The at least two sections may comprise at least two of an STS section of a wireless signal 102, 202 according to the IEEE 802.15.4z standard, a segment x of an STS section of a wireless signal 102, 202 according to the IEEE 802.15.4z standard, x ranging between 1 and the highest possible segment number, an SHR section of a wireless signal 102, 202 according to the IEEE 802.15.4z standard, a SYNC section of an SHR section of a wireless signal 102, 202 according to the IEEE 802.15.4z standard, an SFD section of an SHR section of a wireless signal 102, 202 according to the IEEE 802.15.4z standard, a PHR section of a wireless signal 102, 202 according to the IEEE 802.15.4z standard, and a PPDU section of a wireless signal 102, 202 according to the IEEE 802.15.4z standard.

It is understood, that although the above-mentioned sections all refer to the IEEE 802.15.4z standard, in embodiments, sections of a wireless signal 102, 202 according to any other communication standard may be used.

In embodiments, the channel impulse response may be calculated for at least two different segments of an STS section of a wireless signal 102, 202 according to the IEEE 802.15.4z standard. In such an embodiment, qualifying S3 the wireless distance measurement may comprise qualifying the wireless distance measurement as incorrect if the calculated channel impulse responses are not substantially equal.

In embodiments, the channel impulse response may be calculated for an STS section of a wireless signal 102, 202 according to the IEEE 802.15.4z standard, and a SYNC section of the wireless signal 102, 202 according to the IEEE 802.15.4z standard, and a PPDU section of the wireless signal 102, 202 according to the IEEE 802.15.4z standard. In such an embodiment, qualifying S3 the wireless distance measurement may comprise qualifying the wireless distance measurement as incorrect if the difference between the calculated channel impulse responses for the STS section and the SYNC section or the PPDU section, and the difference between the calculated channel impulse responses for the SYNC section and the PPDU section are not substantially equal.

In embodiments, the channel impulse response may be calculated for an STS section of a wireless signal 102, 202 according to the IEEE 802.15.4z standard, and a SYNC section or a PPDU section of the wireless signal 102, 202 according to the IEEE 802.15.4z standard. Qualifying S3 the wireless distance measurement may in such embodiments comprise calculating the difference between the calculated channel impulse response of the SYNC section or the PPDU section and the calculated channel impulse response of the STS section, and qualifying the wireless distance measurement as incorrect if the calculated difference and an autocorrelation of an expected STS section are not substantially equal.

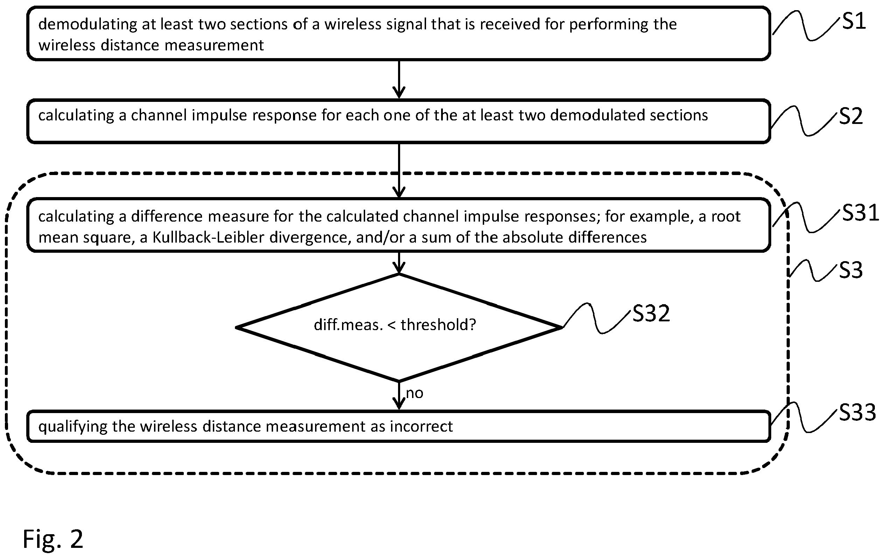

Figure 2 shows a flow diagram of another method for qualifying a wireless distance measurement that is based on the method of figure 1.

The method of figure 2, therefore, comprises demodulating S1 at least two sections of a wireless signal 102, 202 that is received for performing the wireless distance measurement, calculating S2 a channel impulse response for each one of the at least two demodulated sections, and qualifying S3 the wireless distance measurement as incorrect if the calculated channel impulse responses are not substantially equal.

Qualifying S3 the wireless distance measurement in the method of figure 2 comprises calculating S31 a difference measure for the calculated channel impulse responses, and testing S32 if the difference measure is smaller or lower than a predetermined threshold value. If the difference measure is higher than or above the threshold, the wireless distance measurement is qualified S33 as incorrect.

Calculating S31 the difference measure may comprise calculating a root mean square of the channel impulse responses, a Kullback-Leibler divergence of the channel impulse responses, and/or a sum of the absolute differences between the channel impulse responses.

Calculating a difference measure S31 may comprise calculating an individual distance based on each one of the channel impulse responses. The wireless distance measurement may be qualified as incorrect if the calculated individual distances are substantially equal but for at least one of the calculated individual distances. As alternative, the distance that represents the majority of the calculated individual distances that are substantially equal may be output as the measured distance.

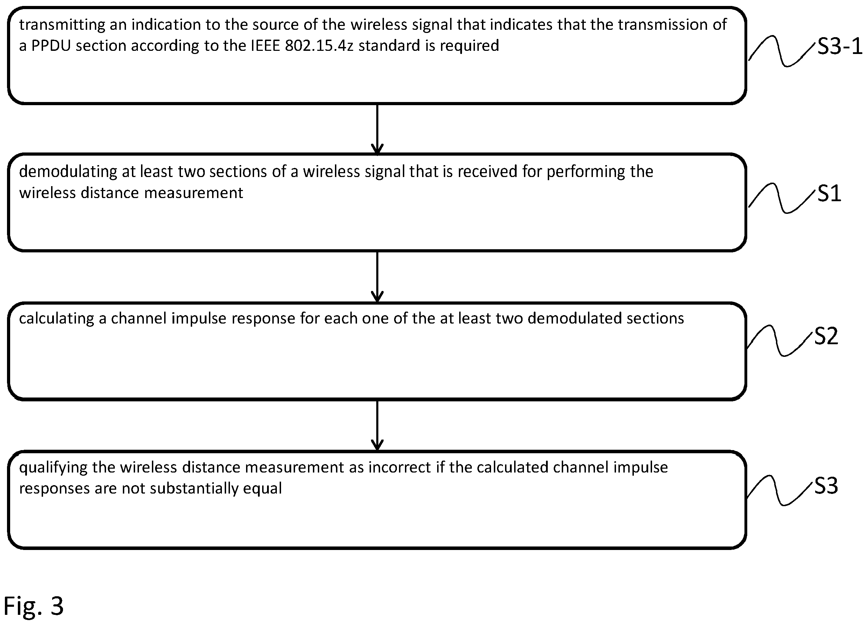

Figure 3 shows a flow diagram of another method for qualifying a wireless distance measurement. The method of figure 3 is based on the method of figure 1, and, therefore, comprises demodulating S1 at least two sections of a wireless signal 102, 202 that is received for performing the wireless distance measurement, calculating S2 a channel impulse response for each one of the at least two demodulated sections, and qualifying S3 the wireless distance measurement as incorrect if the calculated channel impulse responses are not substantially equal.

The method of figure 3 further comprises transmitting S3-1 an indication to the source of the wireless signal 102, 202 that indicates that the transmission of a PPDU section according to the IEEE 802.15.4z standard is required.

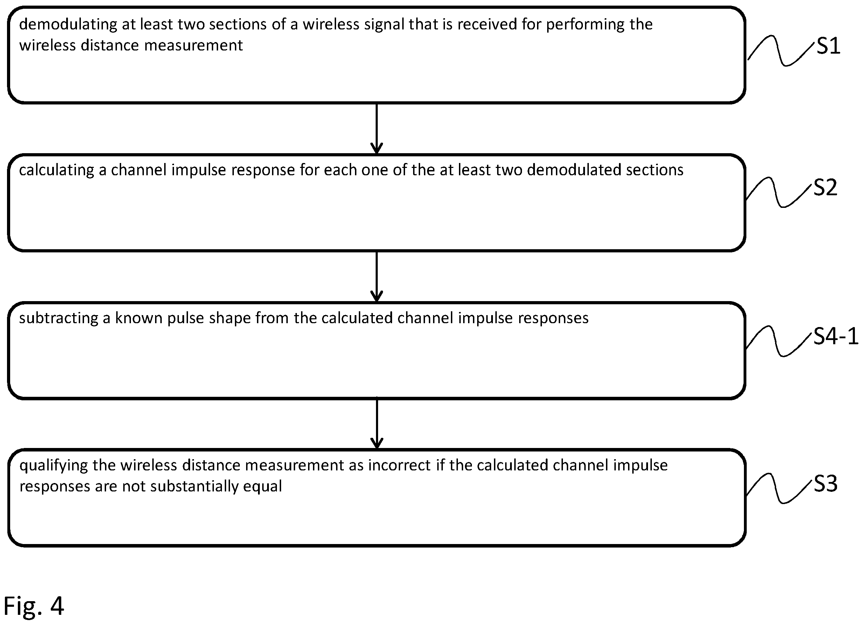

Figure 4 shows a flow diagram of another method for qualifying a wireless distance measurement. The method of figure 4 is based on the method of figure 1, and, therefore, comprises demodulating S1 at least two sections of a wireless signal 102, 202 that is received for performing the wireless distance measurement, calculating S2 a channel impulse response for each one of the at least two demodulated sections, and qualifying S3 the wireless distance measurement as incorrect if the calculated channel impulse responses are not substantially equal.

The method of figure 4 further comprises subtracting S4-1 a known pulse shape from the calculated channel impulse responses after calculating S2 the channel impulse responses and prior to performing further calculations based on the calculated channel impulse responses.

By subtracting the known pulse shape from the calculated channel impulse responses, the true channel impulse responses will be available for further processing.

Figure 5 shows a block diagram of an embodiment of a device 100 for qualifying a wireless distance measurement. The device 100 comprises a signal input interface 101 for receiving a wireless signal 102 that is received for performing the wireless distance measurement. In addition, the device 100 comprises a processing element 103 for performing a method according to any embodiment of the method according to the present disclosure disclosed above or below. Although not explicitly shown, it is understood, that the device 100 may comprise further circuitry, like clock generation and power supply circuitry.

The signal input interface 101 may comprise a digital interface for receiving a digital representation of the wireless signal 102. As alternative, the signal input interface 101 may comprise an analog interface for receiving an analog representation of the wireless signal 102. The analog representation may comprise the wireless signal 102 as received. Of course, the signal input interface 101 may comprise respective elements for preprocessing the received representation of the wireless signal 102. In case of a digital interface, the signal input interface 101 may comprise a communication controller, a transceiver or any other element that is required to perform the digital data communication. In case of an analog interface, the signal input interface 101 may, for example, comprise respective filters, mixers, and/or attenuators.

The output of the device 100 is a qualification result 104 that indicates if the wireless signal 102 comprises any malicious signal or an attacker's signal. If this is the case, the wireless signal measurement may be discarded by the entity that performs the wireless distance measurement.

The device 100 in embodiments may be provided in the entity that performs the wireless distance measurement, and possibly other communication tasks.

In other embodiments, the device 100 may be provided as a dedicated device and may be coupled communicatively to multiple wireless communication devices that perform wireless distance measurements to qualify the different distance measurements. In such an embodiment, the device 100 may preferably be coupled to the single wireless communication devices via a digital interface.

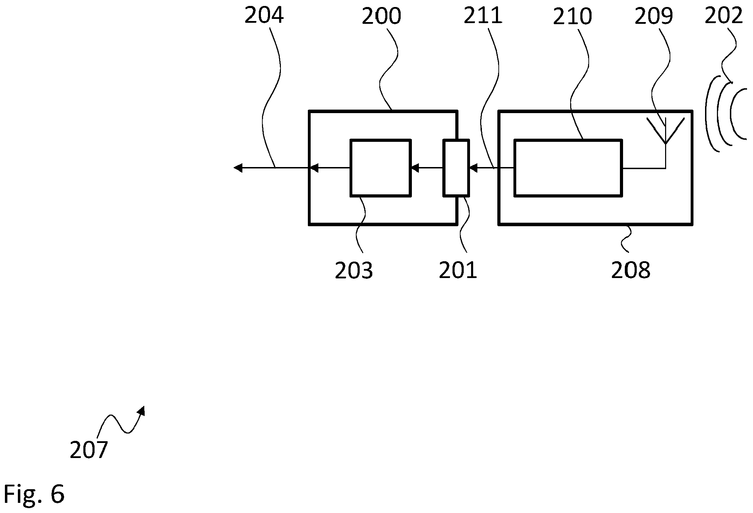

Figure 6 shows a block diagram of a wireless communication device 207. The wireless communication device 207 comprises a possible embodiment of a device 200 for qualifying a wireless distance measurement.

The wireless communication device 207 comprises a wireless communication interface 208 with an antenna 209, and an RF section 210. The antenna 209 serves for receiving the wireless signal 202 and transmitting outgoing wireless signals (not explicitly shown).

The wireless communication device 207 further comprises a device 200 that is coupled via the signal input interface 201 to the RF section 210 for receiving a representation 211 of the wireless signal 202 and processing the representation 211 of the wireless signal 202 with the processing element 203. The RF section 210 may comprise the required circuitry to convert the wireless signal 202 that is received via the antenna 209 into a signal, analog or digital, that may be processed by the device 200. To this end, the RF section 210 may comprise, but is not limited to, any combination of filters, mixers, attenuators, analog-to-digital converters, and processing elements.

Although not explicitly shown, the wireless communication device 207 may comprise further elements for performing communication and distance measurement via wireless signals, like the wireless signal 202 received via the antenna 209.

The wireless communication device 207 may in embodiments comprise a communication device according to the IEEE 802.15.4z standard and operate in a respective wireless communication network or system.

Such a wireless communication network or system may comprise different topologies, wherein the wireless communication device 207 may operate in any of such topologies. Possible topologies comprise, but are not limited to, peer-to-peer and star networks. In such networks, two types of devices may be present, the full-function devices or FFDs, and the reduced-function devices or RFDs. The wireless communication device 207 may operate as any one of these two types.

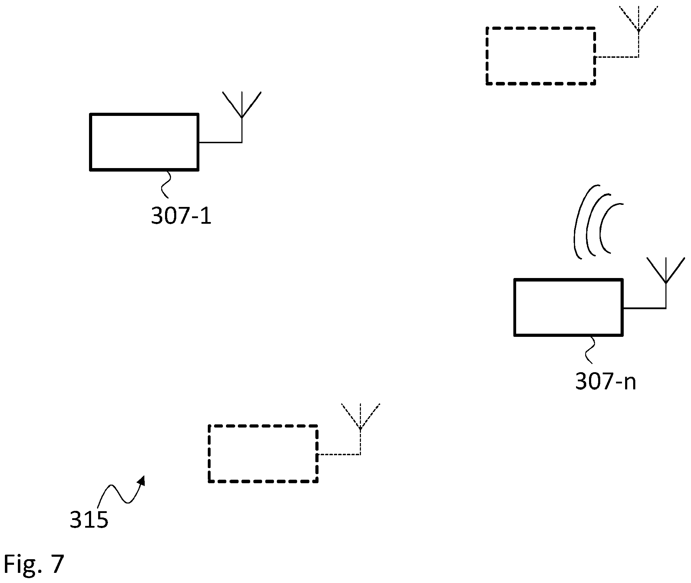

Figure 7 shows a block diagram of a wireless communication system 315 according to the present disclosure. The wireless communication system 315 comprises at least two wireless communication devices 307-1 - 307-n, wherein any number of wireless communication devices is possible.

The wireless communication devices 307-1 - 307-n may be wireless communication devices 307-1 - 307-n that communication according to the IEEE 802.15.4z standard. In such an embodiment, at least one of the wireless communication devices 307-1 - 307-n may be a full-function device or FFD. The other devices may be full-function devices or FFDs or reduced-function devices or RFDs.

At least one of the wireless communication devices 307-1 - 307-n may comprise an embodiment of a device for qualifying a wireless distance measurement.

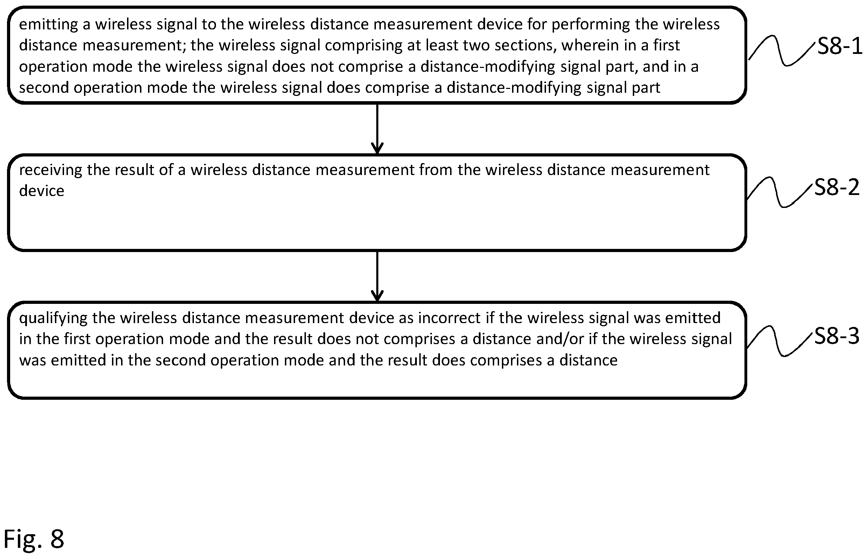

Figure 8 shows a flow diagram of a method for qualifying a wireless distance measurement device 100, 200.

The method comprises emitting S8-1 a wireless signal 102, 202 to the wireless distance measurement device 100, 200 for performing the wireless distance measurement, the wireless signal 102, 202 comprising at least two sections, wherein in a first operation mode the wireless signal 102, 202 does not comprise a distance-modifying signal part, and in a second operation mode the wireless signal 102, 202 does comprise a distance-modifying signal part. Further, the method comprises receiving S8-2 the result of a wireless distance measurement from the wireless distance measurement device 100, 200, and qualifying S8-3 the wireless distance measurement device as 100, 200 incorrect if the wireless signal was emitted in the first operation mode and the result does not comprises a distance and/or if the wireless signal was emitted in the second operation mode and the result does comprises a distance.

It is understood, that the explanations regarding the wireless signal 102, 202 provided above and below also apply to the wireless signal used in the method for qualifying a wireless distance measurement device 100, 200. Further, it is understood, that the method for qualifying a wireless distance measurement device 100, 200 may be executed in any embodiment of a device as explained above or below as an additional function. In other embodiments, the method for qualifying a wireless distance measurement device may be executed in a dedicated device.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software, and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood, that the application is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The abstract of the disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

### LIST OF REFERENCE SIGNS

- S1, S2, S3: method steps
- S31, S32, S3-1, S4-1: method steps
- S8-1, S8-2, S8-3: method steps

- 100,200: device
- 101, 201: signal input interface
- 102, 202: wireless signal
- 103, 203: processing element
- 104, 204: qualification result

- 207, 307-1 - 307-n: wireless communication device
- 208: wireless communication interface
- 209: antenna
- 210: RF section
- 211: representation of wireless signal

- 315: wireless communication system

## Claims

1. Method for qualifying a wireless distance measurement, the method comprising:
demodulating (S1) at least two sections of a wireless signal (102, 202) that is received for performing the wireless distance measurement;
calculating (S2) a channel impulse response for each one of the at least two demodulated sections; and
qualifying (S3) the wireless distance measurement as incorrect if the calculated channel impulse responses are not substantially equal.

2. Method according to claim 1, wherein qualifying (S3) the wireless distance measurement further comprises:
calculating (S31) a difference measure for the calculated channel impulse responses; and
qualifying (S33) the wireless distance measurement as incorrect if the calculated difference measure is above a predetermined threshold.

3. Method according to claim 2, wherein calculating (S31) a difference measure comprises calculating at least one of:
a root mean square of at least two of the channel impulse responses;
a Kullback-Leibler divergence of at least two of the channel impulse responses; and
a sum of the absolute differences between at least two of the channel impulse responses.

4. Method according to claim 2, wherein calculating a difference measure (S31) comprises calculating an individual distance based on each one of the channel impulse responses; and
wherein the wireless distance measurement is qualified as incorrect if the calculated individual distances are substantially equal but for at least one of the calculated individual distances, or wherein the distance that represents the majority of the calculated individual distances that are substantially equal is output as the measured distance.

5. Method according to any one of the preceding claims, wherein the at least two sections comprise at least two of:
an STS section of a wireless signal (102, 202) according to the IEEE 802.15.4z standard;
a segment x of an STS section of a wireless signal (102, 202) according to the IEEE 802.15.4z standard, x ranging between 1 and the highest possible segment number;
an SHR section of a wireless signal (102, 202) according to the IEEE 802.15.4z standard;
a SYNC section of an SHR section of a wireless signal (102, 202) according to the IEEE 802.15.4z standard;
an SFD section of an SHR section of a wireless signal (102, 202) according to the IEEE 802.15.4z standard;
a PHR section of a wireless signal (102, 202) according to the IEEE 802.15.4z standard; and
a PPDU section of a wireless signal (102, 202) according to the IEEE 802.15.4z standard.

6. Method according to any one of the preceding claims, wherein the channel impulse response is calculated for an STS section of a wireless signal (102, 202) according to the IEEE 802.15.4z standard, and a SYNC section of the wireless signal (102, 202) according to the IEEE 802.15.4z standard, and a PPDU section of the wireless signal (102, 202) according to the IEEE 802.15.4z standard; and
wherein qualifying (S3) the wireless distance measurement comprises qualifying the wireless distance measurement as incorrect if the difference between the calculated channel impulse responses for the STS section and the SYNC section or the PPDU section, and the difference between the calculated channel impulse responses for the SYNC section and the PPDU section are not substantially equal.

7. Method according to any one of the preceding claims, wherein the channel impulse response is calculated for at least two different segments of an STS section of a wireless signal (102, 202) according to the IEEE 802.15.4z standard; and
wherein qualifying (S3) the wireless distance measurement comprises qualifying the wireless distance measurement as incorrect if the calculated channel impulse responses are not substantially equal.

8. Method according to any one of the preceding claims, wherein the channel impulse response is calculated for an STS section of a wireless signal (102, 202) according to the IEEE 802.15.4z standard, and a SYNC section or a PPDU section of the wireless signal (102, 202) according to the IEEE 802.15.4z standard; and
wherein qualifying (S3) the wireless distance measurement comprises:
calculating the difference between the calculated channel impulse response of the SYNC section or the PPDU section and the calculated channel impulse response of the STS section;
qualifying the wireless distance measurement as incorrect if the calculated difference and an autocorrelation of an expected STS section are not substantially equal.

9. Method according to any one of the preceding claims, further comprising subtracting (S4-1) a known pulse shape from the calculated channel impulse responses after calculating (S2) the channel impulse responses and prior to performing further calculations based on the calculated channel impulse responses.

10. Method according to any one of the preceding claims, further comprising transmitting (S3-1) an indication to the source of the wireless signal (102, 202) that indicates that the transmission of a PPDU section according to the IEEE 802.15.4z standard is required.

11. Method for qualifying a wireless distance measurement device (100, 200), the method comprising:
emitting (S8-1) a wireless signal (102, 202) to the wireless distance measurement device (100, 200) for performing the wireless distance measurement, the wireless signal (102, 202) comprising at least two sections, wherein in a first operation mode the wireless signal (102, 202) does not comprise a distance-modifying signal part, and in a second operation mode the wireless signal (102, 202) does comprise a distance-modifying signal part;
receiving (S8-2) the result of a wireless distance measurement from the wireless distance measurement device (100, 200); and
qualifying (S8-3) the wireless distance measurement device as incorrect if the wireless signal was emitted in the first operation mode and the result does not comprises a distance and/or if the wireless signal was emitted in the second operation mode and the result does comprises a distance.

12. Device (100, 200) for qualifying a wireless distance measurement, the device comprising:
a signal input interface (101, 201) configured to receive a wireless signal (102, 202) that is received for performing the wireless distance measurement;
a processing element (103, 203) that is coupled to the signal input interface and that is configured to perform a method according to any one of the preceding claims 1 to 10 and/or claim 11.

13. Wireless communication device (207) comprising:
a wireless communication interface (208); and
a device (100, 200) according to claim 12.

14. Wireless communication system comprising:
at least two wireless communication devices (207) according to claim 13.

15. Computer program product comprising computer readable instructions that when executed by a processor cause the processor to perform a method according to any one of claims 1 to 10 and/or claim 11.
